# EUROPEAN PATENT APPLICATION

(11) **EP 4 806 707 A1**
(43) Date of publication of application: **16.09.2026**
(21) Application number: 26162757.4
(22) Date of filing: 05.03.2026
(51) Int. Cl.: B60L 3/00, B60L 15/00, H02K 5/20, H02K 11/00, H02K 11/30, H02K 11/33, H02M 7/00

(54) **DUAL-MOTOR CONTROLLER, POWERTRAIN, AND ELECTRIC VEHICLE**

(30) Priority: 12.03.2025 CN 202510293015
(71) Applicant: HUAWEI TECHNOLOGIES CO., LTD., Shenzhen 518129 (CN)
(72) Inventor: ZHAO, Sunxing, Shenzhen, 518129 (CN); ZHANG, Weilong, Shenzhen, 518129 (CN); GUO, Binxin, Shenzhen, 518129 (CN); HAO, Zhou, Shenzhen, 518129 (CN)
(74) Representative: Gill Jennings & Every LLP

(57) **Abstract**

This application provides a dual-motor controller, a powertrain, and an electric vehicle. An accommodation part of the dual-motor controller is configured to accommodate two heat dissipation devices. A bottom of the accommodation part includes two first ports and two second ports, and each first port and each second port respectively communicate with an inlet and an outlet of one heat dissipation device. The two first ports are spaced apart in a first direction, and the two second ports are spaced apart in the first direction. Each first port and one second port are spaced apart in a second direction. An outer side of the accommodation part includes a coolant inlet and a coolant outlet, and the coolant inlet and the coolant outlet are opposite to each other in the first direction. The two first ports receive a coolant from the coolant inlet through one housing internal flow channel, and the two second ports output a coolant from the coolant outlet through the other housing internal flow channel. In this application, two parallel branches are formed by using housing internal flow channels and the heat dissipation devices, and the coolant inlet and the coolant outlet that are shared by the two housing internal flow channels are opposite to each other. This helps control path lengths of the two parallel branches, and avoids locally insufficient cooling.

## Description

### TECHNICAL FIELD

This application relates to the field of electric vehicle technologies, and in particular, to a dual-motor controller, a powertrain, and an electric vehicle.

### BACKGROUND

In the new-energy vehicle industry, two motors are used in a dual-motor driving technology to respectively control left and right wheels independently, to achieve high-precision torque vector output. A dual-motor controller in a powertrain is configured to: transmit electric energy of a power battery to the two motors and control the two motors to work. When the dual-motor controller is in a working state, internal components generate much heat. However, a current cooling solution for the dual-motor controller has a problem of locally insufficient cooling, which causes a risk of over-temperature aging failure of the dual-motor controller, and brings about adverse impact on working efficiency of the powertrain.

### SUMMARY

Embodiments of this application provide a dual-motor controller, a powertrain, and an electric vehicle.

According to a first aspect, an embodiment of this application provides a dual-motor controller. The dual-motor controller is configured to control two motors, a housing of the dual-motor controller includes an accommodation part, and the accommodation part is configured to accommodate two heat dissipation devices of the dual-motor controller.

A bottom of the accommodation part includes two first ports and two second ports, each first port is configured to communicate with an inlet of one heat dissipation device, each second port is configured to communicate with an outlet of one heat dissipation device, the two first ports are spaced apart in a first direction, the two second ports are spaced apart in the first direction, each first port and one second port are spaced apart in a second direction, and the second direction is perpendicular to the first direction.

An outer side of the accommodation part includes a coolant inlet and a coolant outlet, the coolant inlet and the coolant outlet are oppositely distributed in the first direction, the two first ports are configured to receive a coolant from the coolant inlet through one housing internal flow channel, and the two second ports are configured to output a coolant from the coolant outlet through the other housing internal flow channel.

In this embodiment of this application, the two heat dissipation devices of the dual-motor controller are configured to dissipate heat for different internal components of the dual-motor controller. The two heat dissipation devices are both distributed on an inner side of one accommodation part. This helps reduce an overall volume of the dual-motor controller, and can further provide a condition for integrating the two heat dissipation devices into a same cooling system, to facilitate overall adjustment of flow and distribution of a coolant in the dual-motor controller. If the two heat dissipation devices are respectively located in different accommodation parts, two independent cooling systems need to be used to respectively cooperate with the two heat dissipation devices. This causes lower integration of the dual-motor controller and more processing costs and higher processing difficulty of the dual-motor controller.

In addition, even if adverse impact caused by the two independent cooling systems on implementation of a miniaturization design is not considered, although the two independent cooling systems do not interfere with each other, uniform cooling requires consistency in all aspects of coolant transmission in the two cooling systems. Once one of the cooling systems is faulty, a problem of non-uniform cooling still exists.

In this embodiment of this application, one of the first ports and one of the second ports respectively communicate with an inlet and an outlet of one of the heat dissipation devices, and the other first port and the other second port respectively communicate with an inlet and an outlet of the other heat dissipation device. The two first ports and the two second ports are all distributed at a bottom of one accommodation part. This helps reduce difficulty in communicating the one of the first ports with the other first port by one of housing internal flow channels, and reduce difficulty in communicating the one of the second ports with the other second port by the other housing internal flow channel.

In this embodiment of this application, the two first ports are spaced apart in the first direction, and the two second ports are spaced apart in the first direction. The one of the first ports and the one of the second ports a are spaced apart in the second direction, and the other first port and the other second port are spaced apart in the second direction. The first direction is perpendicular to the second direction. That is, the two first ports and the two second ports may respectively form four vertices of a rectangle. This helps reduce an occupied area of the bottom of the accommodation part.

In this embodiment of this application, the coolant inlet, the one of the housing internal flow channels, the one of the first ports, the one of the heat dissipation devices, the one of the second ports, the other housing internal flow channel, and the coolant outlet form one of cooling branches, and the coolant inlet, the one of the housing internal flow channels, the other first port, the other heat dissipation device, the other second port, the other housing internal flow channel, and the coolant outlet form the other cooling branch. The one of the cooling branches and the other cooling branch are associated with each other through the one of the housing internal flow channels and the other housing internal flow channel, and are not two cooling branches that are independent of each other. This helps implement that the one of the cooling branches and the other cooling branch share the coolant inlet and the coolant outlet, reduce a quantity of holes of the housing of the dual-motor controller, and reduce processing difficulty and processing costs. In this embodiment of this application, the one of the cooling branches and the other cooling branch are connected in parallel. Compared with a solution in which two cooling branches are connected in series, this embodiment of this application helps reduce flow resistance of a coolant, avoid mutual interference between the one of the heat dissipation devices and the other heat dissipation device, and improve uniformity of cooling the dual-motor controller.

In this embodiment of this application, both the coolant inlet and the coolant outlet are distributed on the outer side of the accommodation part, to facilitate checking a communication status, and the coolant inlet and the coolant outlet do not occupy internal space of the accommodation part. The one of the cooling branches and the other cooling branch share the coolant inlet and the coolant outlet. If the coolant inlet and the coolant outlet are arranged on a same side, in the first direction, of a whole formed by the two first ports and the two second ports, and the coolant inlet and the coolant outlet are adjacently arranged in the second direction, there is an obvious difference between a path length of the one of the cooling branches and a path length of the other cooling branch, and cooling effect of the one of the cooling branches on the dual-motor controller is also greatly different from cooling effect of the other cooling branch on the dual-motor controller. In this embodiment of this application, that the coolant inlet and the coolant outlet that are distributed on the outer side of the accommodation part are opposite to each other in the first direction means that the coolant inlet and the coolant outlet are arranged on two sides, in the first direction, of the whole formed by the two first ports and the two second ports. The coolant inlet and the coolant outlet are respectively adjacent to different heat dissipation devices. This helps control a difference between path lengths of the one of the cooling branches and the other cooling branch when the volume of the dual-motor controller is reduced, and avoid non-uniform heat dissipation caused by an excessively large temperature difference between coolants flowing through the one of the heat dissipation devices and the other heat dissipation device.

In an embodiment, the dual-motor controller includes two inverter bridge arm power modules, and the two inverter bridge arm power modules are configured to respectively output three-phase currents to control the two motors.

The two heat dissipation devices are spaced apart inside the accommodation part in the first direction, each inverter bridge arm power module and one heat dissipation device are stacked inside the accommodation part, and the two heat dissipation devices are configured to respectively dissipate heat for the two inverter bridge arm power modules.

In this embodiment of this application, the dual-motor controller implements direct current-alternating current conversion by switching between a turn-on state and a turn-off state of each inverter bridge arm power module. Frequent turn-on and turn-off of each inverter bridge arm power module generates a large amount of heat. The two inverter bridge arm power modules and the two heat dissipation devices are arranged on an inner side of one accommodation part, where one of the inverter bridge arm power modules and the one of the heat dissipation devices are stacked, and the other inverter bridge arm power module and the other heat dissipation device are stacked, so that each heat dissipation device can be used to cool and dissipate heat for one inverter bridge arm power module, thereby implementing temperature control on each inverter bridge arm power module and the dual-motor controller.

In this embodiment of this application, because the first port, the second port, and the heat dissipation device have a communication relationship, and the heat dissipation device and the inverter bridge arm power module have a position relationship of stacked arrangement, an arrangement manner of the first port and the second port affects a layout of the heat dissipation device and the inverter bridge arm power module. An arrangement direction of the two heat dissipation devices is parallel to an arrangement direction of the two first ports and an arrangement direction of the two second ports, and the whole formed by the two first ports and the two second ports occupies a small area at the bottom of the accommodation part, so that arrangement of the two heat dissipation devices and arrangement of the two inverter bridge arm power modules are compact and regular. This helps optimize a layout of the dual-motor controller.

In an embodiment, a length direction of the accommodation part is parallel to the first direction. In this embodiment of this application, the arrangement direction of the two heat dissipation devices is parallel to the length direction of the accommodation part. This helps optimize a layout of the two heat dissipation devices and the two inverter bridge arm power modules. The two heat dissipation devices and the two inverter bridge arm power modules are arranged in the length direction of the accommodation part, to ensure that space can be reserved between the two heat dissipation devices and between the two inverter bridge arm power modules, avoid mutual interference between the two heat dissipation devices, and improve electromagnetic compatibility performance of the two inverter bridge arm power modules.

In an embodiment, opening directions of the two first ports intersect with an extension direction of the one of the housing internal flow channels, and opening directions of the two second ports intersect with an extension direction of the other housing internal flow channel. In this embodiment of this application, a flow direction of a coolant in the one of the housing internal flow channels may be changed by using the two first ports, and a flow direction of a coolant in the other housing internal flow channel may be changed by using the two second ports.

In an embodiment, the dual-motor controller further includes two capacitor modules, and each capacitor module is configured to connect to one inverter bridge arm power module.

Each capacitor module is stacked between one heat dissipation device and the bottom of the accommodation part, each first port and each second port protrude from the bottom of the accommodation part, each first port is configured to accommodate an inlet of one heat dissipation device, and each second port is configured to accommodate an outlet of one heat dissipation device.

In this embodiment of this application, each capacitor module is configured to receive and adjust a direct current transmitted by a power battery, and an output end of each capacitor module is connected to an input end of one inverter bridge arm power module. Functions that each capacitor module may implement include but are not limited to smoothing a voltage, reducing an inductance parameter, weakening a peak voltage, absorbing a high-pulse current, and preventing impact of overcharge of a voltage and a transient voltage on the dual-motor controller.

In this embodiment of this application, one capacitor module is arranged between each heat dissipation device and the bottom of the accommodation part, and each heat dissipation device may cool one inverter bridge arm power module and one capacitor module. Each heat dissipation device is spaced apart from the bottom of the accommodation part. To implement communication between each heat dissipation device and the first port and between the heat dissipation device and the second port, each first port and each second port need to protrude from the bottom of the accommodation part, to compensate for a distance between each heat dissipation device and the bottom of the accommodation part. In addition, each first port and each second port protrude toward one heat dissipation device, so that each first port has space for accommodating an inlet of the heat dissipation device, and each second port has space for accommodating an outlet of the heat dissipation device. This helps reduce leakage of a coolant.

In an embodiment, the one housing internal flow channel and the other housing internal flow channel are distributed inside the bottom of the accommodation part.

In this embodiment of this application, the two housing internal flow channels, the two first ports, and the two second ports all belong to a bottom structure of the accommodation part, so that the one of the housing internal flow channels communicates with different first ports, and the housing internal flow channel b communicates with different second ports, thereby reducing a transmission loss of a coolant flowing from the housing internal flow channel to the first port and the second port. In addition, in this embodiment of this application, the bottom of the accommodation part may be processed in a centralized manner, thereby helping reduce processing difficulty of the housing internal flow channel, the first port, and the second port.

In an embodiment, the extension direction of the one housing internal flow channel and the extension direction of the other housing internal flow channel are parallel to the first direction. An arrangement direction of the one housing internal flow channel and the other housing internal flow channel is parallel to the second direction.

In this embodiment of this application, the extension direction of the one of the housing internal flow channels is parallel to the arrangement direction of the two first ports, and the extension direction of the other housing internal flow channel is parallel to the arrangement direction of the two second ports, so that transmission paths of a coolant between the two first ports and between the two second ports can be shortened, and a power loss of the coolant on the transmission paths can be reduced.

In an embodiment, the one housing internal flow channel extends from the coolant inlet sequentially to the one of the first ports and the other first port. The other housing internal flow channel extends from the coolant outlet sequentially to the other second port and the one of the two second ports.

In this embodiment of this application, the coolant inlet, the one of the first ports, and the other first port are sequentially arranged, and the coolant outlet, the other second port, and the one of the second ports are sequentially arranged. In other words, the coolant inlet and the coolant outlet are distributed in a centrally symmetric manner, so that the path lengths of the one of the cooling branches and the other cooling branch can be further controlled, thereby avoiding a large difference in heat dissipation effect on components such as the two inverter bridge arm power modules, and improving cooling uniformity of the dual-motor controller.

In an embodiment, the other first port is distributed at an end of the one housing internal flow channel, and the one of the second ports is distributed at an end of the other housing internal flow channel. The other first port and the one of the second ports are configured to communicate with different heat dissipation devices.

In this embodiment of this application, the other first port is located on a side that is of the one of the first ports and that is away from the coolant inlet, and the one of the second ports is located on a side that is of the other second port and that is away from the coolant outlet. The other first port is used as an example. If the other first port is spaced apart from one end of the one of the housing internal flow channels, after a coolant flows to the other first port, the coolant continues to flow to the end of the one of the housing internal flow channels. In this case, a flow dead zone is likely to be formed in a region between the other first port and the end of the one of the housing internal flow channels. This is not conducive to smooth discharge of the coolant from the other first port to the other heat dissipation device. In this embodiment of this application, the other first port and the one of the second ports are respectively distributed at the end of the one of the housing internal flow channels and the end of the other housing internal flow channel. This helps reduce flow resistance of the coolant, prevent an excessive residual coolant in the two housing internal flow channels, and improve utilization of the coolant.

According to a second aspect, an embodiment of this application provides a powertrain. The powertrain includes two motors and the dual-motor controller according to any one of embodiments of the first aspect. The bottom of the accommodation part is stacked in two motor containers of the powertrain, each motor container is configured to accommodate one motor, the two motor containers are adjacently arranged in an axial direction of the two motors, and the first direction is parallel to the axial direction of the two motors.

In this embodiment of this application, the accommodation part and the two motor containers are stacked, and arrangement is compact, thereby helping reduce a volume of the powertrain. The two first ports, the two second ports, and the two housing internal flow channels are all integrated into the bottom of the accommodation part, and the bottom of the accommodation part is stacked on the two motor containers. This helps support the accommodation part by using the two motor containers, and ensure stable transmission of a coolant. In this embodiment of this application, the two housing internal flow channels are distributed inside the bottom of the accommodation part, so that adverse impact caused by heat of the two motors on the dual-motor controller can be reduced.

In this embodiment of this application, the first direction is parallel to the axial direction of the two motors, indicating that the arrangement direction of the two first ports and the arrangement direction of the two second ports are parallel to an arrangement direction of the two motor containers. If the first direction intersects with the axial direction of the two motors, in addition to that the two motor containers need to occupy space in the axial direction of the two motors, the two first ports further need to occupy additional space in the first direction. In this embodiment of this application, a length of the accommodation part in a direction that intersects with the axial direction of the two motors can be controlled, and space around the two motor containers is fully utilized, thereby facilitating a miniaturization design of the powertrain.

In an embodiment, the powertrain further includes two reducers, and each reducer is configured to be in transmission connection to one motor. The two reducers are distributed on two sides of the two motors in the axial direction of the two motors, and the coolant inlet and the coolant outlet are distributed on two sides of a wall of the accommodation part in the axial direction of the two motors.

In this embodiment of this application, the bottom of the accommodation part is stacked on the two motor containers. Because the coolant inlet and the coolant outlet are distributed on the outer side of the accommodation part, if the coolant inlet and the coolant outlet are arranged at the bottom of the accommodation part, a problem of avoiding the motor container needs to be considered in positions of the coolant inlet and the coolant outlet, affecting a layout of the two motors. In this embodiment of this application, the coolant inlet and the coolant outlet are arranged on the two sides of the wall of the accommodation part. This can avoid occupying space of the motor container, and further help reduce difficulty of coolant in flowing from the coolant inlet to the one of the housing internal flow channels and from the other housing internal flow channel to the coolant outlet.

In this embodiment of this application, the two reducers are respectively arranged on the two sides of the two motors. Therefore, arranging the coolant inlet and the coolant outlet on the two sides of the wall of the accommodation part is equivalent to using axial lengths occupied by the two reducers, avoiding an additional increase in a length of the powertrain in the axial direction of the two motors.

In an embodiment, the two first ports are respectively stacked with different motor containers, and the two second ports are respectively stacked with different motor containers.

In this embodiment of this application, because the accommodation part and the two motor containers are stacked, heat generated by the two motors in a working process is conducted to the accommodation part respectively through the two motor containers. One of the motor containers is used as an example. If both the two first ports and the two second ports are both stacked with the one of the motor containers, it is difficult for heat generated by a motor accommodated in the other motor container to be absorbed by a coolant of the housing internal flow channel. In this embodiment of this application, each motor container is stacked with one first port and one second port, to ensure that heat conducted by the motor containers to the accommodation part can be taken away by coolants in the two housing internal flow channels, thereby reducing a risk of local overheating of the dual-motor controller.

In an embodiment, a part of walls of the two motor containers are used to form the bottom of the accommodation part, the bottom of the accommodation part includes two protrusions, each protrusion protrudes toward the two heat dissipation devices, each housing internal flow channel is distributed inside one protrusion, the two first ports are stacked on one of the protrusions, and the two second ports are stacked on the other protrusion.

In this embodiment of this application, an inner surface of a wall of each motor container is usually used to fasten a stator of a motor. Therefore, arranging each housing internal flow channel in a protrusion protruding away from the motor can avoid occupying accommodating space of the motor container and interfering with a layout of internal components of the motor by each housing internal flow channel. Each protrusion of the bottom of the accommodation part protrudes toward the two heat dissipation devices, so that distances between each housing internal flow channel and the two heat dissipation devices can be shortened. The two first ports are stacked on the one of the protrusions, and the two second ports are stacked on the other protrusion, so that the two first ports and the two second ports protrude from the bottom of the accommodation part.

In an embodiment, the bottom of the accommodation part further includes a plurality of support plates, one end of each support plate is configured to support one capacitor module of the dual-motor controller, and the other end of each support plate is connected to an outer surface of the one of the protrusions or an outer surface of the other protrusion.

In this embodiment of this application, the support plate can expand a cooling range of a coolant based on the heat dissipation device. One end of each support plate is in contact with one capacitor module, and the other end of the support plate is in contact with the one of the protrusions or the other protrusion. This is equivalent to adding a heat transfer path between each capacitor module and the two housing internal flow channels. Heat generated by each capacitor module can be transferred to a housing internal flow channel in each protrusion through the support plate, so that each capacitor module can work at an appropriate temperature, thereby improving performance of the dual-motor controller. Each housing internal flow channel is distributed in one protrusion, so that the other end of each support plate is connected to one protrusion, and a contact area between the other end of the support plate and the protrusion is increased.

In an embodiment, the walls of the two motor containers include a heat exchanger fastening hole, and the heat exchanger fastening hole is configured to fasten a heat exchanger of the powertrain. The coolant outlet is configured to transmit coolants of the two heat dissipation devices to the heat exchanger.

The heat exchanger fastening hole is spaced apart from the bottom of the accommodation part in a circumferential direction of the two motors, and an opening direction of the coolant outlet faces the heat exchanger fastening hole.

In this embodiment of this application, after flowing through the two heat dissipation devices, a coolant in the accommodation part continues to flow to the heat exchanger outside the accommodation part through the coolant outlet. The heat exchanger of the powertrain is fastened to the walls of the two motor containers through the heat exchanger fastening hole. The heat exchanger fastening hole and the bottom of the accommodation part are both integrated into the walls of the two motor containers. This helps improve integration of the powertrain. The heat exchanger fastening hole and the bottom of the accommodation part surround outer circumferential sides of the two motors in the circumferential direction of the two motors. This helps reduce an overall size of the powertrain and avoid mutual interference between the heat exchanger and the dual-motor controller. The opening direction of the coolant outlet faces the heat exchanger fastening hole. This helps reduce difficulty in transferring a coolant from the coolant outlet to the heat exchanger.

In an embodiment, in a stacking direction of the accommodation part and the two motor containers, a distance between the coolant outlet and the heat exchanger fastening hole is less than a distance between the coolant inlet and the heat exchanger fastening hole.

In this embodiment of this application, the bottom of the accommodation part is a part of the walls of the two motor containers. The wall of the accommodation part protrudes from the bottom of the accommodation part away from the two motor containers in the stacking direction of the accommodation part and the two motor containers. The coolant inlet and the coolant outlet are distributed on an outer side of the wall of the accommodation part. The distance between the coolant outlet and the heat exchanger fastening hole is controlled to be small. This helps shorten a transmission distance of the coolant between the coolant outlet and the heat exchanger, and improve utilization of the coolant and heat exchange efficiency.

According to a third aspect, an embodiment of this application provides an electric vehicle. The electric vehicle includes a power battery and the powertrain according to any one of embodiments of the second aspect. The powertrain is configured to: receive power supplied by the power battery, and drive a wheel of the electric vehicle.

In this embodiment of this application, the powertrain according to any one of embodiments of the second aspect is used in the electric vehicle. Because cooling effect of the dual-motor controller in the powertrain is improved, it is helpful to ensure stable and safe traveling of the electric vehicle.

### BRIEF DESCRIPTION OF DRAWINGS

To describe technical solutions in embodiments of this application more clearly, the following describes the accompanying drawings used in embodiments of this application.
FIG. 1 is a diagram of an electric vehicle according to an embodiment of this application;
FIG. 2 is a diagram of a powertrain according to an embodiment of this application;
FIG. 3 is a diagram of a powertrain according to an embodiment of this application;
FIG. 4 is a cross-sectional view of a powertrain according to an embodiment of this application;
FIG. 5 is a cross-sectional view of a powertrain according to an embodiment of this application;
FIG. 6 is a diagram of a dual-motor controller according to an embodiment of this application;
FIG. 7 is a diagram of a dual-motor controller according to an embodiment of this application;
FIG. 8 is a diagram of a dual-motor controller according to a conventional technology;
FIG. 9 is a diagram of a powertrain according to an embodiment of this application; and
FIG. 10 is a diagram of a powertrain according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

For ease of understanding, the following first explains and describes related technical terms used in embodiments of this application.

Perpendicularity: Perpendicularity defined in embodiments of this application is not limited to an absolute perpendicular intersection relationship. A case in which there is non-absolute perpendicular intersection due to factors such as an assembling tolerance, a design tolerance, and structural flatness is allowed. An error within a small angle range is allowed. For example, a range from 80 degrees to 100 degrees may be understood as a perpendicular relationship.

Parallelism: Parallelism defined in embodiments of this application is not limited to absolute parallelism. A definition of the parallelism may be understood as basic parallelism. A case in which there is non-absolute parallelism due to factors such as an assembly tolerance, a design tolerance, and structural flatness is allowed.

Currently, there is a problem of non-uniform cooling in a dual-motor controller. An embodiment of this application provides a dual-motor controller. The dual-motor controller is configured to control two motors. A housing of the dual-motor controller includes an accommodation part, and the accommodation part is configured to accommodate two heat dissipation devices of the dual-motor controller.

A bottom of the accommodation part includes two first ports and two second ports, each first port is configured to communicate with an inlet of one heat dissipation device, and each second port is configured to communicate with an outlet of one heat dissipation device. The two first ports are spaced apart in a first direction, and the two second ports are spaced apart in the first direction. Each first port and one second port are spaced apart in a second direction, and the second direction is perpendicular to the first direction.

An outer side of the accommodation part includes a coolant inlet and a coolant outlet, and the coolant inlet and the coolant outlet are oppositely distributed in the first direction. The two first ports are configured to receive a coolant from the coolant inlet through one housing internal flow channel, and the two second ports are configured to output a coolant from the coolant outlet through the other housing internal flow channel.

In this embodiment of this application, two parallel cooling branches are formed by using housing internal flow channels and the heat dissipation devices, and the two housing internal flow channels share one coolant inlet and one coolant outlet that are oppositely distributed in the first direction. This helps control path lengths of the two parallel branches, and avoids locally insufficient cooling. The dual-motor controller provided in this embodiment of this application may be used in a powertrain, and the powertrain including the dual-motor controller in this application may be used in an electric vehicle.

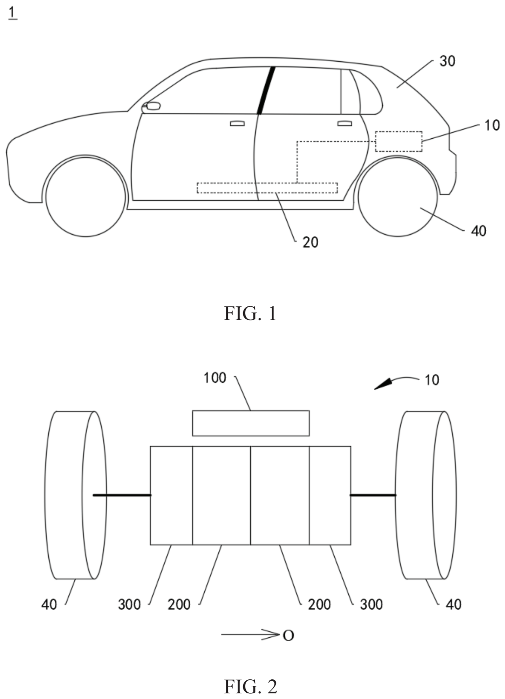

Refer to FIG. 1. FIG. 1 is a diagram of an electric vehicle 1 according to an embodiment of this application. In an embodiment, the electric vehicle 1 includes a powertrain 10 and a power battery 20. In this embodiment of this application, the electric vehicle 1 is a wheeled device driven or pulled by a power apparatus. The power battery 20 is configured to supply power to the powertrain 10. The power battery 20 may also be referred to as a battery pack. The powertrain 10 is a power source of the electric vehicle 1, and the powertrain 10 is configured to drive a wheel 40 of the electric vehicle 1. In an embodiment, the electric vehicle 1 further includes a vehicle frame 30. The vehicle frame 30 is configured to mount the powertrain 10 and the power battery 20. The vehicle frame 30 is a structural framework of the electric vehicle 1, and can bear internal and external environment loads of the electric vehicle 1.

Refer to FIG. 2. FIG. 2 is a diagram of a powertrain 10 according to an embodiment of this application. In an embodiment, the powertrain 10 includes a motor controller, a motor 200, and a reducer 300. A power battery is configured to supply power to the motor 200 through the motor controller. The motor 200 is configured to convert an alternating current into mechanical energy, and then transmit the mechanical energy to the reducer 300, to drive a wheel 40 to rotate. In an embodiment, the motor controller is configured to convert a direct current transmitted by the power battery into an alternating current.

Still refer to FIG. 2. In an embodiment, the powertrain 10 is a dual-motor powertrain, and the powertrain 10 includes a dual-motor controller 100, two motors 200, and two reducers 300. The dual-motor controller 100 controls the two motors 200 by using different internal components, and each motor 200 is configured to be in transmission connection to one reducer 300, to control a motion state of one wheel 40. It should be noted that FIG. 2 merely schematically shows a partial structure of the powertrain 10, and does not represent a specific shape, size, and position relationship of the powertrain 10. In an embodiment, based on an arrangement manner of the two motors 200 and the two reducers 300 in the powertrain 10, the powertrain 10 may present a U-shaped, T-shaped, or line-shaped structural layout.

The dual-motor controller usually has a larger volume than a motor controller for controlling only one motor. If a cooling system of the dual-motor controller is not appropriately adjusted, cooling for different internal components in the dual-motor controller may be non-uniform, a service life and safety performance of the dual-motor controller may be impaired, and finally normal working of the powertrain and an electric vehicle may be affected.

In embodiments of this application, a dual-motor controller is improved, and path lengths of cooling branches for cooling different internal components are adjusted, to avoid a problem of locally insufficient cooling in the dual-motor controller, thereby helping improve performance of a powertrain and an electric vehicle.

The following describes in detail a dual-motor controller 100 provided in an embodiment of this application.

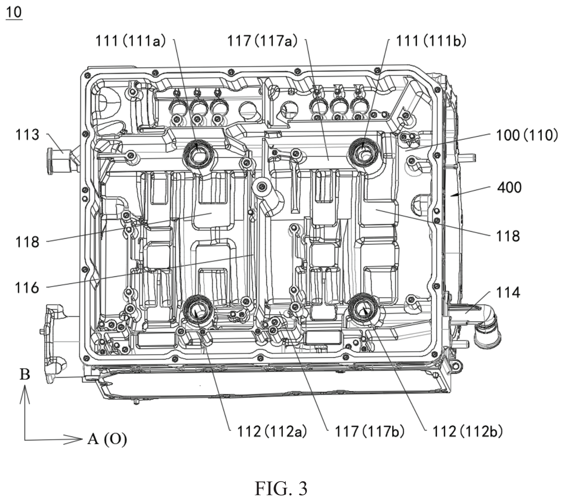

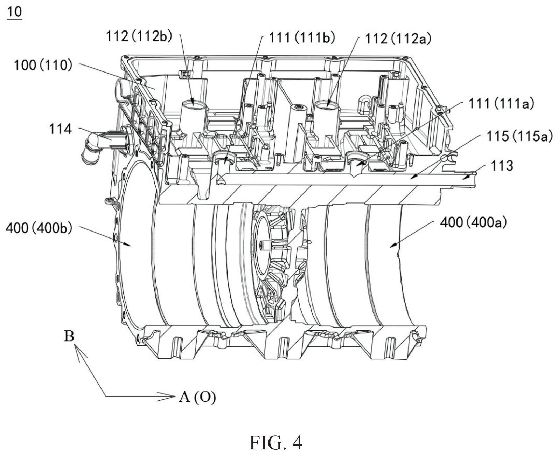

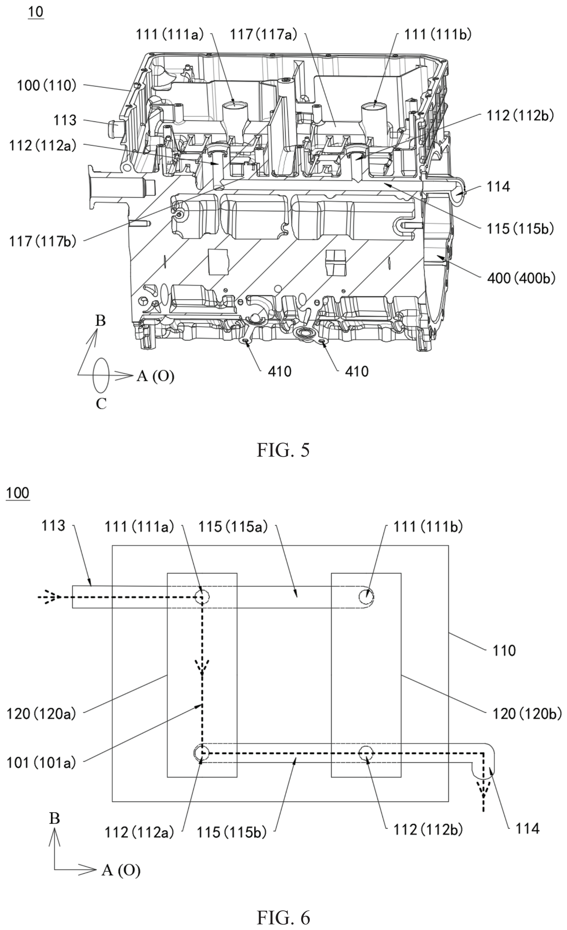

Refer to FIG. 3 to FIG. 5. FIG. 3 is a diagram of a powertrain 10 according to an embodiment of this application. FIG. 4 is a cross-sectional view of the powertrain 10 according to an embodiment of this application. FIG. 5 is a cross-sectional view of the powertrain 10 according to an embodiment of this application.

In an embodiment, a housing of the dual-motor controller 100 includes an accommodation part 110, and the accommodation part 110 is configured to accommodate two heat dissipation devices 120 of the dual-motor controller 100.

A bottom of the accommodation part 110 includes two first ports 111 and two second ports 112. Each first port 111 is configured to communicate with an inlet of one heat dissipation device 120, and each second port 112 is configured to communicate with an outlet of one heat dissipation device 120. The two first ports 111 are spaced apart in a first direction A, and the two second ports 112 are spaced apart in the first direction A. Each first port 111 and one second port 112 are spaced apart in a second direction B, and the second direction B is perpendicular to the first direction A.

An outer side of the accommodation part 110 includes a coolant inlet 113 and a coolant outlet 114, and the coolant inlet 113 and the coolant outlet 114 are oppositely distributed in the first direction A. The two first ports 111 are configured to receive a coolant from the coolant inlet 113 through one housing internal flow channel 115, and the two second ports 112 are configured to output a coolant from the coolant outlet 114 through the other housing internal flow channel 115.

In this embodiment of this application, for ease of description, one of the two heat dissipation devices 120 is denoted as a heat dissipation device 120a, and the other of the two heat dissipation devices 120 is denoted as a heat dissipation device 120b. One of the two first ports 111 is denoted as a first port 111a, and the other of the two first ports 111 is denoted as a first port 111b. One of the two second ports 112 is denoted as a second port 112a, and the other of the two second ports 112 is denoted as a second port 112b. The one housing internal flow channel 115 is denoted as a housing internal flow channel 115a, and the other housing internal flow channel 115 is denoted as a housing internal flow channel 115b.

In this embodiment of this application, the two heat dissipation devices 120 of the dual-motor controller 100 are configured to dissipate heat for different internal components of the dual-motor controller 100. The two heat dissipation devices 120 are both distributed on an inner side of one accommodation part 110. This helps reduce an overall volume of the dual-motor controller 100, and can further provide a condition for integrating the two heat dissipation devices 120 into a same cooling system, to facilitate overall adjustment of flow and distribution of a coolant in the dual-motor controller 100. If the two heat dissipation devices 120 are respectively located in different accommodation parts 110, two independent cooling systems need to be used to respectively cooperate with the two heat dissipation devices 120. This causes lower integration of the dual-motor controller 100 and more processing costs and higher processing difficulty of the dual-motor controller 100.

In addition, even if adverse impact caused by the two independent cooling systems on implementation of a miniaturization design is not considered, although the two independent cooling systems do not interfere with each other, uniform cooling requires consistency in all aspects of coolant transmission in the two cooling systems. Once one of the cooling systems is faulty, a problem of non-uniform cooling still exists.

In this embodiment of this application, the first port 111a and the second port 112a respectively communicate with an inlet and an outlet of the heat dissipation device 120a, and the first port 111b and the second port 112b respectively communicate with an inlet and an outlet of the heat dissipation device 120b. The two first ports 111 and the two second ports 112 are all distributed at a bottom of one accommodation part 110. This helps reduce difficulty in communicating the first port 111a with the first port 111b by the housing internal flow channel 115a, and reduce difficulty in communicating the second port 112a with the second port 112b by the housing internal flow channel 115b.

In this embodiment of this application, the first port 111a and the first port 111b are spaced apart in the first direction A, and the second port 112a and the second port 112b are spaced apart in the first direction A. The first port 111a and the second port 112a are spaced apart in the second direction B, and the first port 111b and the second port 112b are spaced apart in the second direction B. The first direction A is perpendicular to the second direction B. That is, the first port 111a, the first port 111b, the second port 112a, and the second port 112b may respectively form four vertices of a rectangle. This helps reduce an occupied area of the bottom of the accommodation part 110.

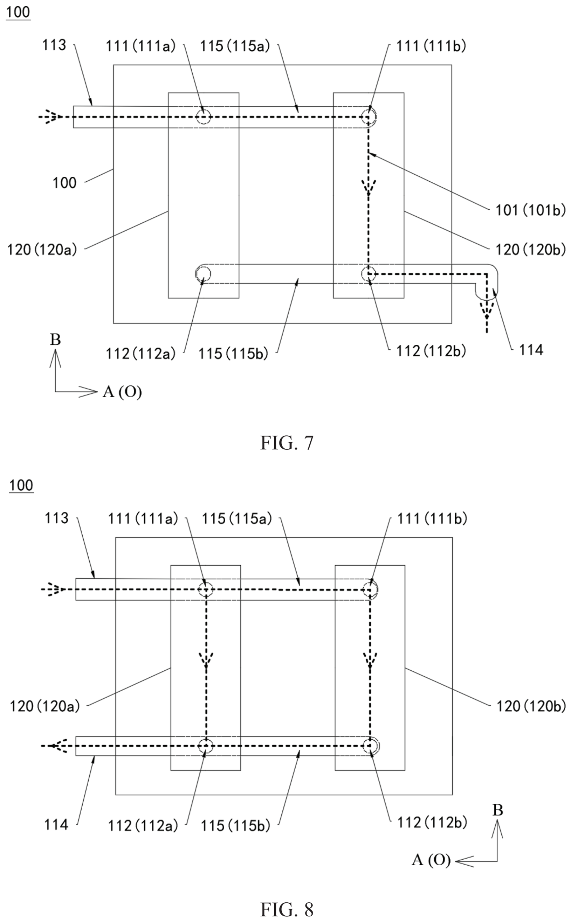

Refer to FIG. 6 and FIG. 7. FIG. 6 is a diagram of the dual-motor controller 100 according to an embodiment of this application, and FIG. 7 is a diagram of the dual-motor controller 100 according to an embodiment of this application. With reference to FIG. 6 and FIG. 7, the coolant inlet 113, the housing internal flow channel 115a, the first port 111a, the heat dissipation device 120a, the second port 112a, the housing internal flow channel 115b, and the coolant outlet 114 form a cooling branch 101a, and the coolant inlet 113, the housing internal flow channel 115a, the first port 111b, the heat dissipation device 120b, the second port 112b, the housing internal flow channel 115b, and the coolant outlet 114 form a cooling branch 101b. The cooling branch 101a and the cooling branch 101b are associated with each other through the housing internal flow channel 115a and the housing internal flow channel 115b, and are not two cooling branches that are independent of each other. This helps implement that the cooling branch 101a and the cooling branch 101b share the coolant inlet 113 and the coolant outlet 114, reduce a quantity of holes of the housing of the dual-motor controller 100, and reduce processing difficulty and processing costs. In this embodiment of this application, the cooling branch 101a and the cooling branch 101b are connected in parallel. Compared with a solution in which two cooling branches 101 are connected in series, this embodiment of this application helps reduce flow resistance of a coolant, avoid mutual interference between the heat dissipation device 120a and the heat dissipation device 120b, and improve uniformity of cooling the dual-motor controller 100.

Bold dashed lines in FIG. 6 and FIG. 7 indicate different cooling branches, and a part of a structure of the dual-motor controller 100 is omitted. It should be noted that, FIG. 6 and FIG. 7 merely schematically show that the heat dissipation devices 120 form different cooling branches with the first ports 111, the second ports 112, and the housing internal flow channels 115, and do not represent specific shapes and sizes of the cooling branches.

In this embodiment of this application, both the coolant inlet 113 and the coolant outlet 114 are distributed on the outer side of the accommodation part 110, to facilitate checking a communication status, and the coolant inlet 113 and the coolant outlet 114 do not occupy internal space of the accommodation part 110. The cooling branch 101a and the cooling branch 101b share the coolant inlet 113 and the coolant outlet 114. Refer to FIG. 8. FIG. 8 is a diagram of a dual-motor controller 100 according to a conventional technology. As shown in FIG. 8, if a coolant inlet 113 and a coolant outlet 114 are arranged on a same side, in a first direction A, of a whole formed by two first ports 111 and two second ports 112, and the coolant inlet 113 and the coolant outlet 114 are adjacently arranged in a second direction B, there is an obvious difference between a path length of a cooling branch 101a and a path length of a cooling branch 101b, and cooling effect of the cooling branch 101a on the dual-motor controller 100 is also greatly different from cooling effect of the cooling branch 101b on the dual-motor controller 100. In this embodiment of this application, that the coolant inlet 113 and the coolant outlet 114 that are distributed on the outer side of the accommodation part 110 are opposite to each other in the first direction A means that the coolant inlet 113 and the coolant outlet 114 are arranged on two sides, in the first direction A, of a whole formed by the two first ports 111 and the two second ports 112. The coolant inlet 113 and the coolant outlet 114 are respectively adjacent to different heat dissipation devices 120. This helps control a difference between path lengths of the cooling branch 101a and the cooling branch 101b when the volume of the dual-motor controller 100 is reduced, and avoid non-uniform heat dissipation caused by an excessively large temperature difference between coolants flowing through the heat dissipation device 120a and the heat dissipation device 120b.

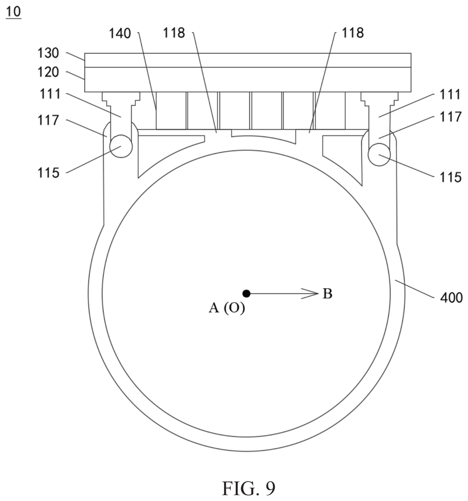

Refer to FIG. 3 and FIG. 9. FIG. 9 is a diagram of the powertrain 10 according to an embodiment of this application. A part of a structure of the powertrain 10 is omitted in FIG. 9.

In an embodiment, the dual-motor controller 100 includes two inverter bridge arm power modules 130, and the two inverter bridge arm power modules 130 are configured to respectively output three-phase currents to control the two motors 200. The heat dissipation device 120a and the heat dissipation device 120b are spaced apart inside the accommodation part 110 in the first direction A, each inverter bridge arm power module 130 and one heat dissipation device 120 are stacked inside the accommodation part 110, and the heat dissipation device 120a and the heat dissipation device 120b are configured to respectively dissipate heat for the two inverter bridge arm power modules 130.

In this embodiment of this application, the dual-motor controller 100 implements direct current-alternating current conversion by switching between a turn-on state and a turn-off state of each inverter bridge arm power module 130. In an embodiment, each inverter bridge arm power module includes a plurality of power transistors, the plurality of power transistors are configured to form a three-phase bridge arm circuit, and the three-phase bridge arm circuit is configured to transmit a three-phase current to the motor. In an embodiment, each inverter bridge arm power module includes six power transistors, and every two power transistors form a one-phase bridge arm circuit. In an embodiment, the power transistor includes at least one of an insulated gate bipolar transistor, a silicon carbide power transistor, a silicon transistor, or a metal-oxide semiconductor field-effect transistor.

In this embodiment of this application, frequent turn-on and turn-off of each inverter bridge arm power module 130 generates a large amount of heat. The two inverter bridge arm power modules 130 and the two heat dissipation devices 120 are arranged on an inner side of one accommodation part 110, where one of the inverter bridge arm power modules 130 and the heat dissipation device 120a are stacked, and the other inverter bridge arm power module 130 and the heat dissipation device 120b are stacked, so that each heat dissipation device 120 can be used to cool and dissipate heat for one inverter bridge arm power module 130, thereby implementing temperature control on each inverter bridge arm power module 130 and the dual-motor controller 100.

In this embodiment of this application, because the first port 111, the second port 112, and the heat dissipation device 120 have a communication relationship, and the heat dissipation device 120 and the inverter bridge arm power module 130 have a position relationship of stacked arrangement, an arrangement manner of the first port 111 and the second port 112 affects a layout of the heat dissipation device 120 and the inverter bridge arm power module 130. An arrangement direction of the two heat dissipation devices 120 is parallel to an arrangement direction of the two first ports 111 and an arrangement direction of the two second ports 112, and the whole formed by the two first ports 111 and the two second ports 112 occupies a small area at the bottom of the accommodation part 110, so that arrangement of the two heat dissipation devices 120 and arrangement of the two inverter bridge arm power modules 130 are compact and regular. This helps optimize a layout of the dual-motor controller 100.

In an embodiment, the bottom of the accommodation part 110 further includes a spacer 116, and the spacer 116 is configured to separate the two inverter bridge arm power modules 130. The two first ports 111 are distributed on two sides of the spacer 116, and the two second ports 112 are distributed on the two sides of the spacer 116. The two housing internal flow channels 115 pass through the spacer 116.

Still refer to FIG. 3 and FIG. 9. In an embodiment, a length direction of the accommodation part 110 is parallel to the first direction A. In this embodiment of this application, the arrangement direction of the two heat dissipation devices 120 is parallel to the length direction of the accommodation part 110. This helps optimize a layout of the two heat dissipation devices 120 and the two inverter bridge arm power modules 130. The two heat dissipation devices 120 and the two inverter bridge arm power modules 130 are arranged in the length direction of the accommodation part 110, to ensure that space can be reserved between the two heat dissipation devices 120 and between the two inverter bridge arm power modules 130, avoid mutual interference between the two heat dissipation devices 120, and improve electromagnetic compatibility performance of the two inverter bridge arm power modules 130.

Still refer to FIG. 4 and FIG. 5. In an embodiment, opening directions of the two first ports 111 intersect with an extension direction of the housing internal flow channel 115a, and opening directions of the two second ports 112 intersect with an extension direction of the housing internal flow channel 115b. In this embodiment of this application, a flow direction of a coolant in the housing internal flow channel 115a may be changed by using the two first ports 111, and a flow direction of a coolant in the housing internal flow channel 115b may be changed by using the two second ports 112, so that the two heat dissipation devices 120 are stacked on the two housing internal flow channels 115, thereby reducing difficulty in arranging the two heat dissipation devices 120 and the two inverter bridge arm power modules 130.

Still refer to FIG. 3 and FIG. 9. In an embodiment, the dual-motor controller 100 further includes two capacitor modules 140, and each capacitor module 140 is configured to connect to one inverter bridge arm power module 130. Each capacitor module 140 is stacked between one heat dissipation device 120 and the bottom of the accommodation part 110. Each first port 111 and each second port 112 protrude from the bottom of the accommodation part 110, each first port 111 is configured to accommodate an inlet of one heat dissipation device 120, and each second port 112 is configured to accommodate an outlet of one heat dissipation device 120.

In this embodiment of this application, each capacitor module 140 is configured to receive and adjust a direct current transmitted by a power battery, and an output end of each capacitor module 140 is connected to an input end of one inverter bridge arm power module 130. Functions that each capacitor module 140 may implement include but are not limited to smoothing a voltage, reducing an inductance parameter, weakening a peak voltage, absorbing a high-pulse current, and preventing impact of overcharge of a voltage and a transient voltage on the dual-motor controller 100.

In this embodiment of this application, one capacitor module 140 is arranged between each heat dissipation device 120 and the bottom of the accommodation part 110, and each heat dissipation device 120 may cool one inverter bridge arm power module 130 and one capacitor module 140. Each heat dissipation device 120 is spaced apart from the bottom of the accommodation part 110. To implement communication between each heat dissipation device 120 and the first port 111 and between the heat dissipation device 120 and the second port 112, each first port 111 and each second port 112 need to protrude from the bottom of the accommodation part 110, to compensate for a distance between each heat dissipation device 120 and the bottom of the accommodation part 110. In addition, each first port 111 and each second port 112 protrude toward one heat dissipation device 120, so that each first port 111 has space for accommodating an inlet of the heat dissipation device 120, and each second port 112 has space for accommodating an outlet of the heat dissipation device 120. This helps reduce leakage of a coolant.

In an embodiment, each first port 111 is further configured to accommodate a first sealing ring, each second port 112 is further configured to accommodate a second sealing ring, the first sealing ring is distributed between an inner surface of each first port 111 and an outer surface of an inlet of one heat dissipation device 120, and the second sealing ring is distributed between an inner surface of each second port 112 and an outer surface of an outlet of one heat dissipation device 120. In this embodiment of this application, the first sealing ring and the second sealing ring are used to avoid leakage of a coolant in a transmission process between the housing internal flow channel and the heat dissipation device.

Still refer to FIG. 4 and FIG. 5. In an embodiment, the housing internal flow channel 115a and the housing internal flow channel 115b are distributed inside the bottom of the accommodation part 110.

In this embodiment of this application, the two housing internal flow channels 115, the two first ports 111, and the two second ports 112 all belong to a bottom structure of the accommodation part 110, so that the housing internal flow channel 115a communicates with different first ports 111, and the housing internal flow channel 115b communicates with different second ports 112, thereby reducing a transmission loss of a coolant flowing from the housing internal flow channel 115 to the first port 111 and the second port 112. In addition, in this embodiment of this application, the bottom of the accommodation part 110 may be processed in a centralized manner to obtain the first port 111, the second port 112, and the housing internal flow channel 115, thereby helping reduce processing difficulty of the first port 111, the second port 112, and the housing internal flow channel 115.

Still refer to FIG. 4 to FIG. 7. In an embodiment, the extension direction of the housing internal flow channel 115a and the extension direction of the housing internal flow channel 115b are parallel to the first direction A. An arrangement direction of the housing internal flow channel 115a and the housing internal flow channel 115b is parallel to the second direction B.

In this embodiment of this application, the extension direction of the housing internal flow channel 115a is parallel to the arrangement direction of the first port 111a and the first port 111b, and the extension direction of the housing internal flow channel 115b is parallel to the arrangement direction of the second port 112a and the second port 112b, so that transmission paths of a coolant between the first port 111a and the first port 111b and between the second port 112a and the second port 112b can be shortened, and a power loss of the coolant on the transmission paths can be reduced.

Still refer to FIG. 4 to FIG. 7. In an embodiment, the housing internal flow channel 115a extends from the coolant inlet 113 sequentially to the first port 111a and the first port 111b. The housing internal flow channel 115b extends from the coolant outlet 114 sequentially to the second port 112b and two second ports 112a.

In this embodiment of this application, the coolant inlet 113, the first port 111a, and the first port 111b are sequentially arranged, and the coolant outlet 114, the second port 112b, and the second port 112a are sequentially arranged. In other words, the coolant inlet 113 and the coolant outlet 114 are distributed in a centrally symmetric manner, so that the path lengths of the cooling branch 101a and the cooling branch 101b can be further controlled, thereby avoiding a large difference in heat dissipation effect on components such as the two inverter bridge arm power modules, and improving cooling uniformity of the dual-motor controller 100.

Still refer to FIG. 4 and FIG. 5. In an embodiment, an arrangement direction of the coolant inlet 113, the first port 111a, and the first port 111b is parallel to the extension direction of the housing internal flow channel 115a, and an arrangement direction of the coolant outlet 114, the second port 112b, and the second port 112a is parallel to the extension direction of the housing internal flow channel 115b. This helps shorten a flow channel of a coolant from the coolant inlet 113 to the first port 111a and a flow channel of the coolant from the second port 112b to the housing internal flow channel 115b.

Still refer to FIG. 4 to FIG. 7. In an embodiment, the first port 111b is distributed at an end of the housing internal flow channel 115a, and the second port 112a is distributed at an end of the housing internal flow channel 115b. The first port 111b and the second port 112a are configured to respectively communicate with the heat dissipation device 120a and the heat dissipation device 120b.

In this embodiment of this application, the first port 111b is located on a side that is of the first port 111a and that is away from the coolant inlet 113, and the second port 112a is located on a side that is of the second port 112b and that is away from the coolant outlet 114. The first port 111b is used as an example. If the first port 111b is spaced apart from an end of the housing internal flow channel 115a, after a coolant flows to the first port 111b, the coolant continues to flow to the end of the housing internal flow channel 115a. In this case, a flow dead zone is likely to be formed in a region between the first port 111b and the end of the housing internal flow channel 115a. This is not conducive to smooth discharge of the coolant from the first port 111b to the heat dissipation device 120b. In this embodiment of this application, the first port 111b and the second port 112a are respectively distributed at the end of the housing internal flow channel 115a and the end of the housing internal flow channel 115b. This helps reduce flow resistance of the coolant, prevent an excessive residual coolant in the housing internal flow channel 115a and the housing internal flow channel 115b, and improve utilization of the coolant.

Refer to FIG. 2 and FIG. 4. In an embodiment, the powertrain 10 includes a dual-motor controller 100 and two motors 200. A bottom of an accommodation part 110 is stacked on two motor containers 400 of the powertrain 10. Each motor container 400 is configured to accommodate one motor 200. The two motor containers 400 are adjacently arranged in an axial direction O of the two motors 200. A first direction A is parallel to the axial direction O of the two motors 200.

In this embodiment of this application, the accommodation part 110 and the two motor containers 400 are stacked, and arrangement is compact, thereby helping reduce a volume of the powertrain 10. Two first ports 111, two second ports 112, and two housing internal flow channels 115 are all integrated into the bottom of the accommodation part 110, and the bottom of the accommodation part 110 is stacked on the two motor containers 400. This helps support the accommodation part 110 by using the two motor containers 400, and ensure stable transmission of a coolant. In this embodiment of this application, the two housing internal flow channels 115 are distributed inside the bottom of the accommodation part 110, so that adverse impact caused by heat of the two motors 200 on the dual-motor controller 100 can be reduced.

In this embodiment of this application, the first direction A is parallel to the axial direction O of the two motors 200, indicating that an arrangement direction of the two first ports 111 and an arrangement direction of the two second ports 112 are parallel to an arrangement direction of the two motor containers 400. In an embodiment, extension directions of the two housing internal flow channels 115 are parallel to the arrangement direction of the two motor containers 400. In an embodiment, a length direction of the accommodation part 110 is parallel to the axial direction O of the two motors 200.

If the first direction A intersects with the axial direction O of the two motors 200, in addition to that the two motor containers 400 need to occupy space in the axial direction O of the two motors 200, the two first ports 111 further need to occupy additional space in the first direction A. In this embodiment of this application, a length of the accommodation part 110 in a direction that intersects with the axial direction O of the two motors 200 can be controlled, and space around the two motor containers 400 is fully utilized, thereby facilitating a miniaturization design of the powertrain 10.

Refer to FIG. 2 and FIG. 4. In an embodiment, the powertrain 10 further includes two reducers 300, and each reducer 300 is configured to be in transmission connection to one motor 200. The two reducers 300 are distributed on two sides of the two motors 200 in the axial direction O of the two motors 200, and a coolant inlet 113 and a coolant outlet 114 are distributed on two sides of a wall of the accommodation part 110 in the axial direction O of the two motors 200.

In this embodiment of this application, the bottom of the accommodation part 110 is stacked on the two motor containers 400. Because the coolant inlet 113 and the coolant outlet 114 are distributed on an outer side of the accommodation part 110, if the coolant inlet 113 and the coolant outlet 114 are arranged at the bottom of the accommodation part 110, a problem of avoiding the motor container 400 needs to be considered in positions of the coolant inlet 113 and the coolant outlet 114, affecting a layout of the two motors 200. In this embodiment of this application, the coolant inlet 113 and the coolant outlet 114 are arranged on the two sides of the wall of the accommodation part 110. This can avoid occupying space of the motor container 400, and further help reduce difficulty of a coolant in flowing from the coolant inlet 113 to a housing internal flow channel 115a and from a housing internal flow channel 115b to the coolant outlet 114.

In this embodiment of this application, the two reducers 300 are respectively arranged on the two sides of the two motors 200. Therefore, arranging the coolant inlet 113 and the coolant outlet 114 on the two sides of the wall of the accommodation part 110 is equivalent to using axial lengths occupied by the two reducers 300, avoiding an additional increase in a length of the powertrain 10 in the axial direction O of the two motors 200.

Still refer to FIG. 4 and FIG. 5. In an embodiment, the two first ports 111 are respectively stacked with different motor containers 400, and the two second ports 112 are respectively stacked with different motor containers 400.

In this embodiment of this application, for ease of description, the two motor containers 400 are respectively denoted as a motor container 400a and a motor container 400b. A first port 111a, a second port 112a, and the motor container 400a are stacked, and a first port 111b, a second port 112b, and the motor container 400b are stacked.

In this embodiment of this application, because the accommodation part 110, the motor container 400a, and the motor container 400b are stacked, heat generated by the two motors 200 in a working process is conducted to the accommodation part 110 respectively through the motor container 400a and the motor container 400b. The motor container 400a is used as an example. If the two first ports 111 and the two second ports 112 are both stacked with the motor container 400a, it is difficult for heat generated by a motor 200 accommodated in the motor container 400b to be absorbed by a coolant of the housing internal flow channel 115. In this embodiment of this application, each motor container 400 is stacked with one first port 111 and one second port 112, to ensure that heat conducted by the motor containers 400 to the accommodation part 110 can be taken away by coolants in the two housing internal flow channels 115, thereby reducing a risk of local overheating of the dual-motor controller 100.

Still refer to FIG. 4 and FIG. 5. In an embodiment, a part of walls of the two motor containers 400 are used to form the bottom of the accommodation part 110. The bottom of the accommodation part 110 includes two protrusions 117, each protrusion 117 protrudes toward two heat dissipation devices 120, and each housing internal flow channel 115 is distributed inside one protrusion 117. The two first ports 111 are stacked on one of the protrusions 117, and the two second ports 112 are stacked on the other protrusion 117.

In this embodiment of this application, for ease of description, the one of the two protrusions 117 is denoted as a protrusion 117a, and the other of the two protrusions 117 is denoted as a protrusion 117b.

In this embodiment of this application, an inner surface of a wall of each motor container 400 is usually used to fasten a stator of a motor 200. Therefore, arranging each housing internal flow channel 115 in a protrusion 117 protruding away from the motor 200 can avoid occupying accommodating space of the motor container 400 and interfering with a layout of internal components of the motor 200 by each housing internal flow channel 115. Each protrusion 117 of the bottom of the accommodation part 110 protrudes toward the two heat dissipation devices 120, so that distances between each housing internal flow channel 115 and the two heat dissipation devices 120 can be shortened. The two first ports 111 are stacked on the protrusion 117a, and the two second ports 112 are stacked on the protrusion 117b, so that the two first ports 111 and the two second ports 112 protrude from the bottom of the accommodation part 110.

Still refer to FIG. 3 and FIG. 9. In an embodiment, the bottom of the accommodation part 110 further includes a plurality of support plates 118, one end of each support plate 118 is configured to support one capacitor module 140 of the dual-motor controller 100, and the other end of the support plate 118 is connected to an outer surface of the protrusion 117a or an outer surface of the protrusion 117b.

In this embodiment of this application, the support plate 118 can expand a cooling range of a coolant based on the heat dissipation device 120. One end of each support plate 118 is in contact with one capacitor module 140, and the other end of the support plate 118 is in contact with the protrusion 117a or the protrusion 117b. This is equivalent to adding a heat transfer path between each capacitor module 140 and the two housing internal flow channels 115. Heat generated by each capacitor module 140 can be transferred to a housing internal flow channel 115 in each protrusion 117 through the support plate 118, so that each capacitor module 140 can work at an appropriate temperature, thereby improving performance of the dual-motor controller 100. Each housing internal flow channel 115 is distributed in one protrusion 117, so that the other end of each support plate 118 is connected to one protrusion 117, and a contact area between the other end of the support plate 118 and the protrusion 117 is increased.

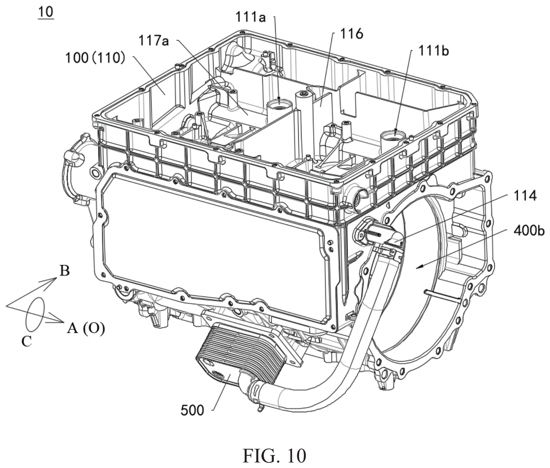

Still refer to FIG. 5 and FIG. 10. FIG. 10 is a diagram of a powertrain 10 according to an embodiment of this application. In an embodiment, walls of two motor containers 400 include a heat exchanger fastening hole 410, and the heat exchanger fastening hole 410 is configured to fasten a heat exchanger 500 of the powertrain 10. A coolant outlet 114 is configured to transmit coolants of two heat dissipation devices 120 to the heat exchanger 500. The heat exchanger fastening hole 410 is spaced apart from a bottom of an accommodation part 110 in a circumferential direction C of two motors 200, and an opening direction of the coolant outlet 114 faces the heat exchanger fastening hole 410.

In this embodiment of this application, after flowing through the two heat dissipation devices 120, a coolant in the accommodation part 110 continues to flow to the heat exchanger 500 outside the accommodation part 110 through the coolant outlet 114. In an embodiment, the coolant flowing from the coolant outlet 114 to the heat exchanger 500 is used for heat exchange with another cooling medium of the heat exchanger 500 to reduce a temperature of the another cooling medium, and the another cooling medium is used to cool the motor 200 and a reducer 300 of the powertrain 10. In an embodiment, the another cooling medium may be a cooling oil.

In this embodiment of this application, the heat exchanger 500 of the powertrain 10 is fastened to the walls of the two motor containers 400 through the heat exchanger fastening hole 410. The heat exchanger fastening hole 410 and the bottom of the accommodation part 110 are both integrated into the walls of the two motor containers 400. This helps improve integration of the powertrain 10. The heat exchanger fastening hole 410 and the bottom of the accommodation part 110 surround outer circumferential sides of the two motors 200 in the circumferential direction C of the two motors 200. This helps reduce an overall size of the powertrain 10 and avoid mutual interference between the heat exchanger 500 and a dual-motor controller 100. The opening direction of the coolant outlet 114 faces the heat exchanger fastening hole 410. This helps reduce difficulty in transferring a coolant from the coolant outlet 114 to the heat exchanger 500.

Still refer to FIG. 5 and FIG. 10. In an embodiment, in a stacking direction of the accommodation part 110 and the two motor containers 400, a distance between the coolant outlet 114 and the heat exchanger fastening hole 410 is less than a distance between a coolant inlet 113 and the heat exchanger fastening hole 410.

In this embodiment of this application, the bottom of the accommodation part 110 is a part of the walls of the two motor containers 400. The wall of the accommodation part 110 protrudes from the bottom of the accommodation part 110 away from the two motor containers 400 in the stacking direction of the accommodation part 110 and the two motor containers 400. The coolant inlet 113 and the coolant outlet 114 are distributed on an outer side of a wall of the accommodation part 110. The distance between the coolant outlet 114 and the heat exchanger fastening hole 410 is controlled to be small. This helps shorten a transmission distance of the coolant between the coolant outlet 114 and the heat exchanger 500, and improve utilization of the coolant and heat exchange efficiency.

The foregoing describes in detail the dual-motor controller, the powertrain, and the electric vehicle provided in embodiments of this application. The principles and embodiments in this application are described in this specification by using specific examples. The descriptions about embodiments are merely provided to help understand the method in this application and core ideas of the method. In addition, a person of ordinary skill in the art may make modifications to the specific embodiments and the application scope based on the idea of this application. In conclusion, the content of this specification shall not be construed as a limitation on this application.

## Claims

1. A dual-motor controller, wherein the dual-motor controller is configured to control two motors, a housing of the dual-motor controller comprises an accommodation part, and the accommodation part is configured to accommodate two heat dissipation devices of the dual-motor controller;
a bottom of the accommodation part comprises two first ports and two second ports, each first port is configured to communicate with an inlet of one heat dissipation device, each second port is configured to communicate with an outlet of one heat dissipation device, the two first ports are spaced apart in a first direction, the two second ports are spaced apart in the first direction, each first port and one second port are spaced apart in a second direction, and the second direction is perpendicular to the first direction; and
an outer side of the accommodation part comprises a coolant inlet and a coolant outlet, the coolant inlet and the coolant outlet are oppositely distributed in the first direction, the two first ports are configured to receive a coolant from the coolant inlet through one housing internal flow channel, and the two second ports are configured to output a coolant from the coolant outlet through the other housing internal flow channel.

2. The dual-motor controller according to claim 1, wherein the dual-motor controller comprises two inverter bridge arm power modules, and the two inverter bridge arm power modules are configured to respectively output three-phase currents to control the two motors; and
the two heat dissipation devices are spaced apart inside the accommodation part in the first direction, each inverter bridge arm power module and one heat dissipation device are stacked inside the accommodation part, and the two heat dissipation devices are configured to respectively dissipate heat for the two inverter bridge arm power modules.

3. The dual-motor controller according to claim 2, wherein the dual-motor controller further comprises two capacitor modules, and each capacitor module is configured to connect to one inverter bridge arm power module; and
each capacitor module is stacked between one heat dissipation device and the bottom of the accommodation part, each first port and each second port protrude from the bottom of the accommodation part, each first port is configured to accommodate an inlet of one heat dissipation device, and each second port is configured to accommodate an outlet of one heat dissipation device.

4. The dual-motor controller according to any one of claims 1 to 3, wherein the one housing internal flow channel and the other housing internal flow channel are distributed inside the bottom of the accommodation part.

5. The dual-motor controller according to any one of claims 1 to 4, wherein an extension direction of the one housing internal flow channel and an extension direction of the other housing internal flow channel are parallel to the first direction, and an arrangement direction of the one housing internal flow channel and the other housing internal flow channel is parallel to the second direction.

6. The dual-motor controller according to any one of claims 1 to 5, wherein the one housing internal flow channel extends from the coolant inlet sequentially to one of the first ports and the other first port, and the other housing internal flow channel extends from the coolant outlet sequentially to the other second port and one of the two second ports.

7. The dual-motor controller according to claim 6, wherein the other first port is distributed at an end of the one housing internal flow channel, the one of the second ports is distributed at an end of the other housing internal flow channel, and the other first port and the one of the second ports are configured to communicate with different heat dissipation devices.

8. A powertrain, wherein the powertrain comprises the two motors and the dual-motor controller according to any one of claims 1 to 7, the bottom of the accommodation part is stacked in two motor containers of the powertrain, each motor container is configured to accommodate one motor, the two motor containers are adjacently arranged in an axial direction of the two motors, and the first direction is parallel to the axial direction of the two motors.

9. The powertrain according to claim 8, wherein the powertrain further comprises two reducers, each reducer is configured to be in transmission connection to one motor, the two reducers are distributed on two sides of the two motors in the axial direction of the two motors, and the coolant inlet and the coolant outlet are distributed on two sides of a wall of the accommodation part in the axial direction of the two motors.

10. The powertrain according to claim 8, wherein the two first ports are respectively stacked with different motor containers, and the two second ports are respectively stacked with different motor containers.

11. The powertrain according to any one of claims 8 to 10, wherein a part of walls of the two motor containers are used to form the bottom of the accommodation part, the bottom of the accommodation part comprises two protrusions, each protrusion protrudes toward the two heat dissipation devices, each housing internal flow channel is distributed inside one protrusion, the two first ports are stacked on one of the protrusions, and the two second ports are stacked on the other protrusion.

12. The powertrain according to claim 11, wherein the bottom of the accommodation part further comprises a plurality of support plates, one end of each support plate is configured to support one capacitor module of the dual-motor controller, and the other end of the support plate is connected to an outer surface of the one of the protrusions or an outer surface of the other protrusion.

13. The powertrain according to any one of claims 8 to 12, wherein the walls of the two motor containers comprise a heat exchanger fastening hole, the heat exchanger fastening hole is configured to fasten a heat exchanger of the powertrain, and the coolant outlet is configured to transmit coolants of the two heat dissipation devices to the heat exchanger; and
the heat exchanger fastening hole is spaced apart from the bottom of the accommodation part in a circumferential direction of the two motors, and an opening direction of the coolant outlet faces the heat exchanger fastening hole.

14. The powertrain according to claim 13, wherein in a stacking direction of the accommodation part and the two motor containers, a distance between the coolant outlet and the heat exchanger fastening hole is less than a distance between the coolant inlet and the heat exchanger fastening hole.

15. An electric vehicle, wherein the electric vehicle comprises a power battery and the powertrain according to any one of claims 8 to 14, and the powertrain is configured to: receive power supplied by the power battery, and drive a wheel of the electric vehicle.
